# EUROPEAN PATENT APPLICATION

(11) **EP 1 912 193 A1**
(43) Date of publication of application: **16.04.2008**
(21) Application number: 06121621.4
(22) Date of filing: 02.10.2006
(51) Int. Cl.: G09B 5/06

(54) **Interactive storyteller system**

(71) Applicant: Koninklijke Philips Electronics N.V., 5621 BA Eindhoven (NL)
(72) Inventor: The designation of the inventor has not yet been filed
(74) Representative: Gravendeel, Cornelis

(57) **Abstract**

The interactive storyteller system (11) of the invention comprises electronic circuitry, wherein the electronic circuitry is operative to allow a user to select data associated with a book (13), the data comprising a plurality of associations, each of the plurality of associations being between one or more words of the book (13) and an output signal, detect one or more spoken words, look up an association comprising the one or more spoken words in the plurality of associations, and reproduce the output signal associated with the one or more spoken words. The computer program product of the invention enables a programmable device to function as the system of the invention.

## Description

### FIELD OF THE INVENTION

The invention relates to an interactive storyteller system comprising electronic circuitry.

The invention further relates to a computer program product enabling a programmable device to function as an interactive storyteller system.

### BACKGROUND OF THE INVENTION

Interactive storyteller systems are known from computer games. In these computer games, a story is told by the computer and a user can choose his path through the story with a controller. A drawback of these computer games is that they are often not suitable for very young children.

### SUMMARY OF THE INVENTION

It is an object of the invention to provide an interactive storyteller system which provides interactive story elements while being suitable for very young children.

According to the invention, the object is realized in that the electronic circuitry is operative to allow a user to select data associated with a book, the data comprising a plurality of associations, each of the plurality of associations being between one or more words of the book and an output signal, detect one or more spoken words, look up an association comprising the one or more spoken words in the plurality of associations, and reproduce the output signal associated with the one or more spoken words. Instead of fully automating the storytelling process, the system of the invention allows users, e.g. fathers or mothers, to read the story themselves, but supports the user reading the story out loud with output signals. The user may select data associated with the book by inserting a removable medium in the system, holding an object, e.g. the book, in the vicinity of the system or by a using a user interface to select the book from a list of books. The one or more words of the book that are associated with output signals may be underlined in the book, so that the user knows how much he can deviate from the story.

In an embodiment of the system of the invention, the output signal comprises an audio and/or light signal. The audio signal may be a scary sound or scary music. The light signal may recreate the light of a candle or the light of a thunderstorm, for example.

The light signal may comprise ultraviolet light. This can be used to make hidden messages in the book visible.

The interactive storyteller system may comprise a portable projector, the portable projector projecting at least part of an image associated with the one or more spoken words when the portable projector is in an active state. For example, after the words "the crocodile awakens" are spoken, shining a torch, i.e. the portable projector, on the wall can reveal the crocodile or a part of the crocodile.

The interactive storyteller system may comprise means for detecting a movement of the portable projector and the portable projector projects a different part of the image upon detection of the movement. For example, only a part of a crocodile is revealed at a time, but shining the torch, i.e. the portable projector, on different parts of the wall may reveal the whole crocodile.

The output signal may comprise an audio effect applied to a microphone input signal. For example, after the words "they entered the cave" are spoken, an echo effect is created using the microphone.

### BRIEF DESCRIPTION OF THE DRAWINGS

These and other aspects of the invention are apparent from and will be further elucidated, by way of example, with reference to the drawings, in which:
Fig.1 is a flow chart of the method of the invention;
Fig.2 shows an embodiment of the interactive storyteller system of the invention;
Fig.3 shows a portable projector that can be used in the interactive storyteller system of Fig.2; and
Fig. 4 is a block diagram of the interactive storyteller system of the invention.

Corresponding elements in the drawings are denoted by the same reference numeral.

### DETAILED DESCRIPTION OF THE DRAWINGS

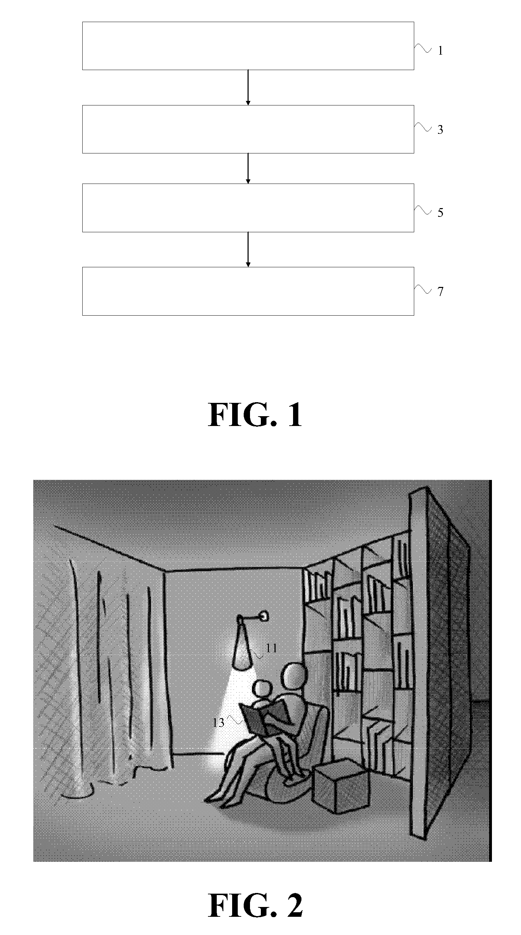

The method of the invention comprises four steps, see Fig. 1. Step 1 allows a user to select data associated with a book, the data comprising a plurality of associations, each of the plurality of associations being between one or more words of the book and an output signal. Step 3 detects one or more spoken words. Step 5 looks up an association comprising the one or more spoken words in the plurality of associations. Step 7 reproduces the output signal associated with the one or more spoken words. Common speech recognition technology may be used in step 3. Common storage technology may be used in step 5.

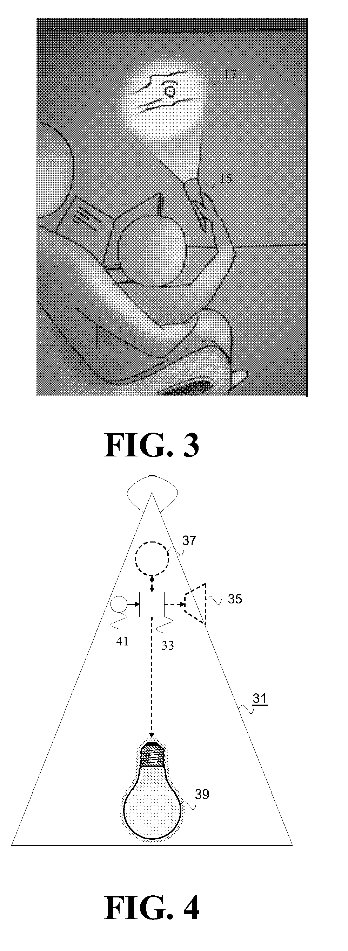

Fig. 2 shows an embodiment of the interactive storyteller system 11. In this embodiment, the system 11 is a cone-shaped device comprising a lamp. The person reading the book 13 preferably sits close to the cone-shaped device. The system 11 further comprises a torch 15, i.e. a portable projector, which can project an image 17 on a wall, see Fig.3.

The interactive storyteller system 31 of Fig. 4 comprises electronic circuitry 33 which is operative to allow a user to select data associated with a book, the data comprising a plurality of associations, each of the plurality of associations being between one or more words of the book and an output signal, detect one or more spoken words, look up an association comprising the one or more spoken words in the plurality of associations, and reproduce the output signal associated with the one or more spoken words.

The system 11 comprises a microphone 41 for receiving voice signals. The voice signals are passed to the electronic circuitry 33, which analyzes them using common techniques to detect, i.e. recognize, spoken words. The electronic circuitry 33 may comprise a general-purpose or application-specific processor. The system 11 may comprise reproduction means 35, e.g. a speaker. The electronic circuitry 33 may use the reproduction means 35 to reproduce an audio output signal. The system may comprise a storage means 37, for example a hard disk or solid state memory like a Flash memory. The storage means 37 may be used to store data for one or more books. Alternatively, a wireless transceiver could be used to receive the data from an external source. The system 11 comprises a lamp 39 for producing light output signals.

While the invention has been described in connection with preferred embodiments, it will be understood that modifications thereof within the principles outlined above will be evident to those skilled in the art, and thus the invention is not limited to the preferred embodiments but is intended to encompass such modifications. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. In the apparatus claim enumerating several means, several of these means can be embodied by one and the same item of hardware. 'Computer program product' is to be understood to mean any software product stored on a computer-readable medium, such as a floppy disk, downloadable via a network, such as the Internet, or marketable in any other manner.

## Claims

1. An interactive storyteller system (11,31), comprising electronic circuitry (33), the electronic circuitry (33) being operative to:
allow (1) a user to select data associated with a book (13), the data comprising a plurality of associations, each of the plurality of associations being between one or more words of the book (13) and an output signal;
detect (3) one or more spoken words;
look up (5) an association comprising the one or more spoken words in the plurality of associations; and
reproduce (7) the output signal associated with the one or more spoken words.

2. An interactive storyteller system as claimed in claim 1, wherein the output signal comprises an audio and/or light signal.

3. An interactive storyteller system as claimed in claim 1, wherein the light signal comprises ultraviolet light.

4. An interactive storyteller system as claimed in claim 1, comprising a portable projector (15), the portable projector projecting at least part of an image (17) associated with the one or more spoken words when the portable projector (15) is in an active state.

5. An interactive storyteller system as claimed in claim 4, wherein the interactive storyteller system (11, 31) comprises means for detecting a movement of the portable projector and the portable projector projects a different part of the image (17) upon detection of the movement.

6. An interactive storyteller system as claimed in claim 1, wherein the output signal comprises an audio effect applied to a microphone input signal.

7. A computer program product enabling a programmable device to function as the interactive storyteller system of claim 1.
